Europäisches Patentamt

(19) European Patent Office

Office européen des brevets

(11) Publication number: **0 043 276**
**B2**

(12) **NEW EUROPEAN PATENT SPECIFICATION**

(45) Date of publication of the new patent specification: **01.08.90**

(51) Int. Cl.⁵: **A 23 C 3/03**

(21) Application number: **81302954.3**

(22) Date of filing: **29.06.81**

(54) **Improvements relating to the storage of fresh liquid milk products.**

(30) Priority: **30.06.80 GB 8021375**

(43) Date of publication of application:
**06.01.82 Bulletin 82/01**

(45) Publication of the grant of the patent:
**21.03.84 Bulletin 84/12**

(45) Mention of the opposition decision:
**01.08.90 Bulletin 90/31**

(84) Designated Contracting States:
**AT BE CH DE FR GB IT LI NL SE**

(56) References cited:
**DE-B-1 186 732**
**FR-B-1 085 224**
**NL-A-7 208 942**
**US-A-3 117 879**

**JOURNAL OF DAIRY SCIENCE, vol. 57, no. 3, March 1974, pages 280-284, A.P. HANSEN et al.: "Effect of ultra-high temperature steam injection on flavor acceptability of whole and fortified skim milks"**

(73) Proprietor: **MILK MARKETING BOARD**
**Thames Ditton Surrey KT7 OEL (GB)**

(72) Inventor: **Wiles, Robert**
**The Villa Crudgington**
**Telford Shropshire (GB)**
Inventor: **Prentice, George Anderson**
**28 Fleetside**
**East Molesey Surrey (GB)**
Inventor: **Brown, John Virgo**
**4 Normanhurst Road**
**Walton-on-Thames Surrey (GB)**

(74) Representative: **Goldin, Douglas Michael et al**
**J.A. KEMP & CO. 14, South Square Gray's Inn**
**London WC1R 5EU (GB)**

Courier Press, Leamington Spa, England.

(56) References cited:

J.G. Zadow, Ultra-heat Treatment of Dairy Products, C.S.I.R.O. (1975) 35, Pages 41-47 Melkkunde "Een inleiding in samenstelling, structuur en eigenschappen van melk."

Landbouwhogeschool, Wageningen (1977) p. 183

Journal of Food Protection, Vol. 43, March 1980, p. 220

Koeltechniek 64 (1971) (7), pp.136-138 (1971) Sporevormende bacterien in voedingsmiddelen, W.J. Kooiman, p.92,PUDOC, Wageningen 1980 Byproducts from milk (1970) pp.239-245

Journal of Dairy Science, vol. 57 no.3, pp.280-284 (1974)

Schroder & Bland, 1983, Journal of the Society of Dairy Technology, 36, 43 49

Franklin et al., 1958, Journal of Applied Bacteriology, 21,51to 57

Davies et al., 1977, Journal of Food technology 12, 115 to 129

Neaves, P,1981, Thermal inactivation kinetics of bacterial spores at ultra-high temperatures with particular reference to Clostridium botulinum. PhD thesis, University of Surrey

Cheeseman & Jayne-Williams, 1964, Nature, 204, 688

Busta, 1966, Journal of Dairy Science, 49, 751 to 756

Brown, J.V.,Wiles, r. and Prentice, G.A.,J.Soc. Dairy Technology,33(2), 78, (1980)

Journal of Applied Bacteriology (1976), Vol.41, pp.1-11

Hermier, J.et al, J.Dairy Research, (1975), Vol.42, p.437

## Description

This invention relates to an improved process for the storage of fresh liquid milk products and is particularly conerned with a process for the treatment of fresh cream, fresh milk and other fresh liquid milk products to prolong the shelf-life of such products when stored under refrigerated conditions.

It is well-known that the storage-life of cream, milk and other fresh liquid milk products is very short when these products are stored at ambient temperature, e.g. 10 to 20°C, and that the shelf-life of such products can be prolonged by storing the products under refrigerated conditions, e.g. 5 to 10°C. Such refrigeration prolongs the shelf-life from perhaps 1 to 2 days up to perhaps 4 to 6 days but prolongations of shelf-life of this order of magnitude are of limited value industrially.

The deterioration in the quality of cream, milk and other fresh liquid milk products is due to microbiological activity which normally develop within a few days storage to a level such that the product takes on unacceptable flavour characteristics and frequently undergoes unacceptable physical changes. The micro-biological activity that gives rise to these unacceptable changes is not prevented by conventional pasteurisation treatment and it has been proposed to subject dairy products to higher heat treatments in order to inhibit this microbiological activity. Such heat treatment may involve flash-heating to about 145°C, the so-called ultra high temperature (U.H.T.) treatment. Products which have been heat treated in this way do have prolonged shelf-lives of several months but all such products suffer from the severe disadvantage that they lose their fresh taste and take on a characteristic taste which is less than attractive to the consumer.

It has also been proposed to improve the keeping properties of fresh milk by subjecting the milk to short-time heat treatment at 100—145°C, preferably about 105°C, followed by packaging the heat-treated milk at a temperature of 70 to 80°C and then subsequently cooling the packaged milk in a predetermined manner. From the practical point of view, we have found that, by operating at the preferred temperature of 105°C, no significant prolongation of shelf-life is obtained while if the product is given a conventional UHT treatment it immediately takes on the unacceptable "sterilised" flavour.

Consequently, there is still a need for a heat-treatment process which will inhibit the microbiological activity in fresh milk products to an extent which will permit the product to be stored under refrigeration for prolonged periods of time, e.g. in excess of 4 weeks, while at the same time avoiding the difficulties of the unacceptable "sterilised" flavour. The present invention is based upon our discovery that by careful selection of the heat-treatment temperature, it is possible to inhibit microbiological activity in the treated product when it is stored at 5 to 10°C for periods of up to 7 weeks or longer while, at the same time, producing a product which is free from the characteristic "sterilised" flavour and whose taste is indistinguishable from the fresh product.

Accordingly, the present invention provides a process for the production of a fresh liquid milk product having a prolonged shelf-life which comprises heating a fresh liquid milk product to a temperature of 105—130°C for at least 0.5 seconds but not more than 5 minutes and then rapdily cooling the product to a temperature below 25°C and introducing the product under aseptic conditions into a sterile container which is then sealed, the temperature and duration of the heating step being sufficient to give a product which can be maintained in the aseptically packed sealed container at a temperature of 7°C for a period in excess of 4 weeks without detectable change in the flavour or aroma characteristics of the product.

The heat-treatment in accordance with the present invention is preferably carried out at a temperature of 115—130°C, particularly at 120—125°C and we have found that for many commercially available fresh liquid milk products, e.g. single cream having an 18% by weight butter fat content, that optimum results are obtained with a heat-treatment temperature of 125°C.

The holding time of the milk product in the heating step will be in the range 0.5 seconds to 5 minutes, the temperatures at the lower end of the range 105—130°C normally being used in association with holding times at the upper end of the range 0.5 seconds—5 minutes and vice versa, the combinations of temperature and time being sufficient to bring about substantial inibition of microbiological activity when the product is stored for at least 4 weeks at a temperature not exceeding 10°C while it is not sufficient to bring about the unacceptable flavour characteristic of UHT products. We have found that a heat-treatment in accordance with the present invention for a period of 1 to 2 seconds at 120°—125°C is readily achievable using existing flash heating equipment and gives rise to a product of extremely good storage, taste, smell and apperance characteristics. Similar results can be obtained using lower temperatures, e.g. at 110°C treatment will normally need to continue for 2—5 minutes. In general a temperature of 115°—130°C is preferred.

While we do not wish to be bound by the correctness of our theoretical considerations, we believe that the onset of microbiological deterioration in heat-treated fresh milk products, even when they are stored under refrigerated conditions, may be attributable to psychotropic sporeforming bacteria whose existence in fresh milk was first reported about 10 years ago. The germination of such bacteria has been found to be stimulated by heat-treatment at the temperatures conventionally used for the pasteurisation of milk and at temperatures in excess of this, e.g. temperatures up to about 100°C. Consequently, we believe that the previously proposed heat-treatments at temperatures which would avoid the development of the characteristic "sterilised" flavour of the milk actually stimulated the germination of these psychotropic sporeforming bacteria so that when such heat-trated products were subsequently stored under refrigerated

3

conditions, the germinated bacteria then grew and microbiological deterioration set in. We have observed that, provided the heat-treatment is carried out at a temperature above 105°C, the subsequent growth under refrigerated condditions of micro-organisms in the milk product, including the psychotrophic sporeforming bacteria, can be substantially inhibited.

The present invention is particularly designed for the treatment of a cream containing 18% by weight butter fat. The process of the invention is equally applicable for the treatment of creams containing a different percentage of butter fat, e.g. whipping cream containing a minimum of 35% by weight butter fat or double cream containing a minimum of 48% by weight butter fat. The process of the invention is also applicable to the treatment of whole fresh milk or milk with a reduced butter fat content e.g. about 1.5% by weight butter fat or about 0.05% by weight butter fat i.e. essentially butter fat free milk.

Once the milk or cream product has been subjected to heat-treatment in accordance with the present invention, it is rapidly cooled to a packaging temperature below 25°C. The heat-treated product obtained in accordance with the present invention may be packaged at ambient temperature, as it is not necessary to package the product at elevated temperatures which have been essential features of previously proposed heat-treating processes for the prolongation of the shelf-life of milk and cream products. The heat-treated product obtained by the process of the present invention should be packaged under aseptic conditions so as to prevent any post-pasteurisation contamination.

It is also desirable that, prior to the heat-treatment in accordance with the present invention, the cream or other fresh liquid milk product is subjected to pre-heating at a temperature of 70—80°C. The pre-heating is not necessary in order to achieve the necessary inhibition of microbiological activity during subsequent storage under refrigerated conditions but is desirable because it brings about a stabilisation of the milk protein and this in turn eables the heat-treating plant to be run for long periods of time before cleaning becomes necessary. A further advantage of this pre-heating is that it can be conveniently carried out for perhaps 10 to 15 seconds which means that, perhaps in association with the subsequent heat-treatment at 105—130°C in accordance with the present invention, the product has been subjected to the statutory heat-treatment necessary for a product to be sold as a pasteurised product in England and Wales.

Regardless of the butter fat content in the fresh milk product to be treated in accordance with the present invention, it is desirable to subject the product to homogenisation.

Once the milk product has been subjected to heat-treatment in accordance with the present invention, it is rapidly cooled prior to packaging. The cooled product can then be introduced into a conventional aseptic filler operating, for example, at 12 to 15°C for a single cream product or at 6 to 8°C for a whipping cream or double cream.

Once the cooled product has been aseptically packaged, it may be maintained under refrigerated conditions for several weeks when it will be found that there is no detectable change in its flavour or aroma characteristics which are substantially identical to the flavour and aroma characteristics of the product before heat-treatment.

The following Examples are given to illustrate the invention.

Example 1

A fresh single cream containing 18% by weight butter fat was subjected to heat-treatment in a sterilised flash heater whose outflow led to a cooler and then to an aseptic filler. A pre-heated homogenised cream was flash-heated to a temperature of 125°C for 2 seconds and the cream was then rapidly cooled to a temperature of 12 to 15°C which is the temperature at which single cream achieves its optimum viscosity. The cooled cream was then passed to a Metal Box aseptic filler (Metal Box Ltd.) where the cream was packaged and sealed. The packaged cream was then stored under refrigerated conditions.

The procedure described above was repeated but with the heat-treatment being carried out at various lower temperatures in the range 115—125°C.

All of the products obtained by the above procedures were stored at 7°C and they were examined periodically for bacterial development and for any change in organoleptic properties. The bacteriological testing was carried out by the total colony count and by the presumptive coliform test, both according to British Standard 4285 : 1968. The organoleptic testing was carried out by a panel of at least three people using a scale of 1 to 8 in accordance with the procedure published by Brown, Wiles and Prentice, J. Soc. Dairy Technol. 32 (2) 109. The shelf-life of the cream was considered terminated when either the total bacteriological count reached $1.0 \times 10^7$ or the creams were unacceptable organoleptically.

The following results were obtained:

TABLE 1

Bacterial development in single cream flashed to 115—125°C for 1—2 seconds and stored at 7°C

| Age (Days) | Flashed at 115°C Total Count/ g | Flashed at 117.5°C Total Count/ g | Flashed at 120°C Total Count/ g | Flashed at 122.5°C Total Count/ g | Flashed at 125°C Total Count/ g |
|---|---|---|---|---|---|
| 0 | 9 | 7 | 2 | < 1 | 1 |
| 2 | 10 | 8 | 1 | 1 | 4 |
| 6 | 7 | 3 | 2 | 3 | < 1 |
| 9 | 3,150 | 700 | 105 | 3 | 1 |
| 13 | > 3,000,000 | > 300,000 | 20 | 4 | 3 |
| 17 | 25,000,000 | 23,000,000 | 100 | < 1 | < 1 |
| 20 | | | 15 | 10 | 4,000 |
| 23 | | | 125 | 30 | 10 |
| 27 | | | 10 | 160 | < 10 |
| 34 | | | 40 | 15 | 15 |
| 41 | | | 10 | 15 | < 10 |
| 49 | | | < 10 | < 10 | < 10 |

Note: All coliform -ve

EP 0 043 276 B2

TABLE 2

Organoleptic scores of single cream flashed to 115—125°C for 1—2 seconds and stored at 7°C

| Age (Days) | Control | Flashed at 115°C | Flashed at 117.5°C | Flashed at 120°C | Flashed at 122.5°C | Flashed at 125°C |
|---|---|---|---|---|---|---|
| 2 | 4.0 | 4.0 | 5.33 | 5.75 | 5.5 | 6.0 |
| 8 | 4.75 | 6.0 | 6.5 | 6.25 | 6.25 | 6.25 |
| 16 | 1.0 | 1.0 | 1.0 | 6.0 | 6.0 | 6.0 |
| 23 | NR | D | D | 6.5 | 6.0 | 6.0 |
| 34 | 6.0 | D | D | 6.0 | 6.33 | 6.75 |
| 41 | 5.5 | D | D | 6.16 | 6.33 | 5.5 |
| 50 | 5.57 | D | D | 6.14 | NR | 5.86 |

D = Discontinued
NR = No result

EP 0 043 276 B2

It will be seen that the creams flash-heated to a temperature of 120—125°C had a shelf-life equal to or greater than 49 days while the mean organoleptic scores for these creams was considerably better than that of fresh shop bought cream. The conventionally pasteurised and aseptically packaged cream had a shelf-life of only 17 days with a relatively low mean organoleptic score.

## Example 2

A cream obtained by pre-heating at 80°C for 13 seconds followed by flashing at 125°C for 1—2 seconds was subjected to a number of trips on a milk float doing its conventional round. While on the milk float, the cream was at ambient temperature. Between each round, it was refrigerated. These experiments were carried out during the months of June and July so that the creams were subjected to wide variation in storage temperature. Periodically, samples were removed from bacteriological and organoleptic analysis as described in Example 1 when the following results were obtained:

## TABLE 3

Bacteriological and organoleptic characteristics of single cream heat-treated at 125°C for 1—2 seconds with a preheat of 80°C for 13 seconds

| Age of cream (days) | No. of Rounds | Total Bacterial count/g | Organoleptic Scores | |
|---|---|---|---|---|
| | | | Tests | Controls |
| 6 | 1 | < 10 | 7.4 | 7.2 |
| 28 | 2 | 450 | 6.5 | 8.0 |
| 28 | 3 | 520 | 7.7 | 8.0 |
| 36 | 4 | 30 | 6.6 | 6.7 |
| 42 | 5 | 10 | 7.2 | 6.5 |
| 42 | 6 | < 10 | 6.4 | 7.4 |

The results given in the Table show that the creams in accordance with the invention did not suffer bacteriologically and were comparable organoleptically to the control creams.

## Example 3

The procedure described in Example 1 was repeated by replacing the single cream with a whipping cream containing 38% by weight butter fat and a double cream containing 48% by weight butter fat and the creams then subjected to bacteriological and organoleptic analysis. The following results were obtained:

TABLE 4

Bacterial development and organoleptic score of whipping and double cream heat-treated at 125°C for 1—2 seconds and stored at 7°C

| Age (Days) | Whipping Cream | | | Double Cream | | |
|---|---|---|---|---|---|---|
| | Total Count g | Organoleptic Score | | Total Count g | Organoleptic Score | |
| | | Test cream | Control | | Test cream | Control |
| 0 | < 1 | | | < 1 | | |
| 2 | <10 | 6.25 | NR | <10 | 6.25 | 7.25 |
| 6 | <10 | 6.75 | NR | NR | 5.75 | 7.25 |
| 9 | <10 | 6.6 | NR | <10 | 7.0 | 6.2 |
| 13 | <10 | 6.2 | NR | 85 | 7.7 | 7.2 |
| 16 | <10 | 6.5 | 7.25 | <10 | 7.25 | 7.5 |
| 20 | <10 | 7.75 | NR | <10 | 6.5 | 7.0 |
| 23 | 30 | 7.0 | 7.0 | 900 | 6.6 | 5.8 |
| 27 | <10 | 6.5 | NR | <10 | 6.5 | 5.75 |
| 30 | <10 | 7.7 | 8.0 | <10 | 6.75 | 7.0 |
| 34 | 10 | 7.5 | 8.0 | 20 | 6.75 | 7.5 |
| 37 | 180 | 7.0 | 7.6 | <10 | 7.2 | 7.2 |

Notes: 1 All coloforms -ve    2 NR = No result

These results show that the shelf-life of both creams were equal to or in excess of 37 days and both had organoleptic and physical characteristics comparable to the control creams.

Example 4

The procedure described in Example 1 was repeated using ordinary fresh milk which was subjected to a pre-heating at 80°C for 13 seconds followed by flashing to 120° or 125°C for 1 to 2 seconds and subsequent storage at 7°C. The bacteriological and organoleptic analysis was carried out with the following results:

TABLE 5

The shelf life and mean organoleptic score of milk heat-treated at 120°C and 125°C for 1—2 seconds with a pre-heat of 80°C for 13 seconds

| Heat Treatment | Shelf life (days) | Mean Organoleptic Score through Storage | |
|---|---|---|---|
| | | Test | Control |
| 120°C | >37 | 7.7 | 7.8 |
| 125°C | >37 | 7.6 | 7.8 |

These results show that the milk heat-treated in accordance with the present invention had a shelf-life equal to or in excess of 37 days with an organoleptic score comparable to that of a fresh control milk.

Example 5

The procedure described in Example 1 was repeated by the single cream was first subjected to a pre-heating at 80°C for 13 seconds and was then heated at 110°C for 1—2 seconds, 60 seconds, 120 seconds, 180 seconds, 240 seconds or 300 seconds. After cooling and aseptic packaging, the cream was stored at 7°C for 7 weeks and, at weekly intervals the bacterial development and organoleptic properties were assessed as described in Example 1 and the results obtained are set out in Tables 6 and 7 respectively.

9

TABLE 6

Bacterial development

| Age of Cream | 110°C/ 1-2 s Total count/g | 110°C/ 60 s Total count/g | 110°C/ 120 s Total count/g | 110°C/ 180 s Total count/g | 110°C/ 240 s Total count/g | 110°C/ 300 s Total count/g |
|---|---|---|---|---|---|---|
| 7 | $>3.0 \times 10^5$ | 10 | $<10$ | 10 | $<10$ | $<10$ |
| 14 | D | 65 | $<10$ | $<10$ | $<10$ | $<10$ |
| 21 | D | $3 \times 10^5$ | $<10$ | 10 | $<10$ | $<10$ |
| 28 | D | $3.8 \times 10^5$ | 10 | $<10$ | $<10$ | $<10$ |
| 35 | D | D | NR | $<10$ | $<10$ | 395 |
| 42 | D | D | $<10$ | $<10$ | 40 | 20 |
| 49 | D | D | 20 | $<10$ | 35 | 10 |

D = Discontinued
NR = No result

TABLE 7

Organoleptic properties

| Age of Cream (Days) | 110°C 1-2 s | 110°C 60 s | 110°C 120 s | 110°C 180 s | 110°C 240 s | 110°C 300 s | Fresh shop bought control |
|---|---|---|---|---|---|---|---|
| 7 | 1.25 | 7.25 | 7.25 | 7.0 | 7.25 | 6.75 | 7.5 |
| 14 | D | 7.0 | 6.75 | 6.25 | 6.75 | 7.0 | 6.75 |
| 21 | D | 6.75 | 6.75 | 7.25 | 7.0 | 7.0 | 7.0 |
| 28 | D | 2.25 | 7.25 | 7.0 | 6.75 | 7.25 | 7.0 |
| 35 | D | D | 7.0 | 6.5 | 7.0 | 7.5 | 6.5 |
| 42 | D | D | 6.5 | 7.0 | 7.5 | 7.5 | 5.5 |
| 49 | D | D | 6.6 | 7.3 | 7.3 | 7.0 | 7.0 |

D = Discontinued

EP 0 043 276 B2

Table 6 shows that, as in Example 1, bacterial development occurs within a week when a temperature at the lower end of the range is used in association with a short holding time but that, by increasing the holding time for 2—5 minutes, storage periods up to 7 weeks can be secured without significant bacterial development. The organoleptic properties were assessed each week by the comparison with a freshly bought sample of cream obtained from a shop each week and Table 7 shows that the creams treated in accordance with the invention at 110°C for 2—5 minutes were at least as acceptable organoleptically, even after 7 weeks storage, as the shop bought products.

## Claims

1. A process for the production of a fresh liquid product having a prolonged shelf life which comprises heating a fresh liquid milk product to a temperature of 105—130°C for at least 0.5 seconds but not more than 5 minutes and then rapidly cooling the product to a temperature below 25°C and introducing the product under aseptic conditions into a sterile container which is then sealed, the temperature and duration of the heating step being sufficient to give a product which can be maintained in the aseptically packed sealed container at a temperature of 7°C for a period in excess of 4 weeks without detectable change in the flavour or aroma characteristics of the product.

2. A process according to claim 1 wherein the heating is carried out at 115°—130°C.

3. A process according to claim 2 wherein the heating is carried out at 120—125°C for about 1—2 seconds.

4. A process according to claim 3 wherein the heating is carried out at about 125°C for about 1—2 seconds.

5. A process according to claim 1 wherein the heating is carried out at about 110°C for 2—5 minutes.

6. A process according to any one of claims 1—5 wherein the fresh liquid milk product is whole fresh milk.

7. A process according to any one of claims 1—5 wherein the fresh liquid milk product contains at least 18% by weight butter fat.

8. A process according to claim 7 wherein the fresh liquid milk product contains at least 35% by weight butter fat.

9. A process according to claim 8 wherein the fresh liquid milk product contains at least 48% by weight butter fat.

10. A process according to any one of claims 1—9 wherein, prior to the heating, the product is subjected to a pre-heating at 70—80°C.

11. A process according to claim 10 wherein the product is pre-heated for 10—15 seconds.

## Patentansprüche

1. Verfahren zur Herstellung eines frischen, flüssigen Produkts mit verlängerter Haltbarkeitszeit, gekennzeichnet durch Erhitzen eines frischen Trinkmilchprodukts auf eine Temperatur von 105—130°C für wenigstens, 0,5 Sekunden, jedoch nicht länger als 5 Minuten, durch anschließendes rasches Kühlen des Produkts auf eine Temperatur unter 25°C und durch Einbringen des Produkts unter keimfreien Bedingungen in einen sterilen Behälter, der dann dicht verschlossen wird, wobei die Temperatur sowie die Dauer des Erhitzungsschritts für die Lieferung eines Produkts ausreichend gemacht werden, das in dem keimfrei abgeschlossenen Behälter bei einer Temperatur von 7°C für eine vier Wochen überschreitende Zeitdauer ohne feststellbare Änderung in den Geschmacks- oder Aromaeigenschaften des Produkts aufbewahrt werden kann.

2. Verfahren nach Anspruch 1, dadurch gekennzeichnet, daß das Erhitzen bei 115—130°C ausgeführt wird.

3. Verfahren nach Anspruch 2, dadurch gekennzeichnet, daß das Erhizten bei 120—125°C für etwa 1—2 Sekunden ausgeführt wird.

4. Verfahren nach Anspruch 3, dadurch gekennzeichnet, daß das Erhitzen bei etwa 125°C für etwa 1—2 Sekunden ausgeführt wird.

5. Verfahren nach Anspruch 1, dadurch gekennzeichnet, daß das Erhitzen bei etwa 110°C für 2—5 Minuten ausgeführt wird.

6. Verfahren nach einem der Ansprüche 1 bis 5, dadurch gekennzeichnet, daß das frische Trinkmilchprodukt Frisch-Vollmilch ist.

7. Verfahren nach einem der Ansprüche 1 bis 5, dadurch gekennzeichnet, daß das frische Trinkmilchprodukt wenigstens 18 Gew.-% Butterfettgehalt aufweist.

8. Verfahren nach Anspruch 7, dadurch gekennzeichnet, daß das frische Trinkmilchprodukt wenigstens 35 Gew.-% Butterfettgehalt aufweist.

9. Verfahren nach Anspruch 8, dadurch gekennzeichnet, daß das frische Trinkmilchprodukt wenigstens 48 Gew.-% Butterfettgehalt aufweist.

10. Verfahren nach einem der Ansprüche 1 bis 9, dadurch gekennzeichnet, daß das Produkt vor dem Erhitzen einer Vorwärmung bei 70—80°C ausgesetzt wird.

11. Verfahren nach Anspruch 10, dadurch gekennzeichnet, daß das Produkt für 10—15 Sekunden vorgewärmt wird.

**Revendications**

1. Procédé pour la production d'un produit liquide frais ayant une durée de conservation prolongée, qui comprend les étapes consistant à chauffer un produit laitier liquide frais à une température de 105—13°C pendant au moins 0,5 seconde mais pas plus de 5 minutes, puis à refroidir rapidement le produit à une température inférieure à 25°C, et à introduire le produit dans des conditions d'asepsie dans un conteneur stérile qui est ensuite scellé, la température et la durée de l'étape de chauffage étant suffisantes pour donner un produit que peut être maintenu dans le conteneur scellé aseptiquement à une température de 7°C pendant une période supérieure à 4 semaines sans changement détectable dans les caractéristiques de goût ou d'arôme du produit.

2. Procédé selon la revendication 1, dans lequel le chauffage est effectué à 115—130°C.

3. Procédé selon la revendication 2, dans lequel le chauffage est effectué à 120—125°C pendant 1—2 secondes.

4. Procédé selon la revendication 3, dans lequel le chauffage est effectué à environ 125°C pendant 1—2 secondes environ.

5. Procédé selon la revendication 1, dans lequel le chauffage est effectué à environ 110°C pendant 2—5 minutes.

6. Procédé selon l'une quelconque des revendications 1 à 5, dans lequel le produit laitier liquide frais est du lait entier frais.

7. Procédé selon l'une quelconque des revendications 1 à 5, dans lequel le produit laitier liquide frais contient au moins 18% en poids de matière grasse.

8. Procédé selon la revendication 7, dans lequel ledit produit laitier liquide frais contient au moins 35% en poids matière grasse.

9. Procédé selon la revendication 8, dans lequel le produit laitier liquide frais contient au moins 48% en poids de matière grasse.

10. Procédé selon l'une quelconque des revendications 1 à 9, dans lequel, avant le chauffage, le produit est soumis à un préchauffage à 70—80°C.

11. Procédé selon la revendication 10, dans lequel le produit est préchauffé pendant 10—15 secondes.